# EUROPEAN PATENT APPLICATION

(11) **EP 0 723 938 A2**
(43) Date of publication of application: **31.07.1996**
(21) Application number: 96300402.3
(22) Date of filing: 22.01.1996
(51) Int. Cl.: C02F 1/52, C02F 1/72, C02F 11/14

(54) **Method for treating water**

(30) Priority: 25.01.1995 GB 9501400
(71) Applicant: AIR PRODUCTS AND CHEMICALS, INC., Allentown, PA 18195-1501 (US)
(72) Inventor: Xiong, Feng, Basingstoke, Hampshire RG24 9DP (GB)
(74) Representative: Burford, Anthony Frederick

(57) **Abstract**

Organic impurities are removed from water (1) by mixing (3) with a chemical precipitation reagent (2) to remove organic substances by charge neutralisation thereof; separating (5) the resultant sludge (4) from the treated water (14); subjecting the separated sludge (4) to oxidising conditions (7,8) to oxidize the organic substances in the sludge (4); dewatering (10) the oxidised sludge; and recycling at least a portion (11) of the dewatered sludge, if necessary after regeneration to provide the chemical precipitation reagent (2), for mixing with further impurities-containing water (1). Preferably, the reagent (2) is a salt of a metal having an insoluble hydroxide and the effluent is at acid pH when the salt is added so that organic substances can be removed both by charge neutralization of hydrophilic organic substances and by entrainment of hydrophobic organic substances.

## Description

The present invention relates to the treatment of surface water or aqueous industrial effluent to remove organic impurities therefrom.

Many surface water treatment plants and industrial waste water treatment works employ chemical precipitation reagents such as metal salts, especially Fe or Al salts, to remove organic substances by charge neutralisation and coprecipitation/adsorption thereof. These processes generate a large quantity of sludge which usually is settled out from the treated water in a settling tank or floated off the water via a dissolved air flotation process. This sludge can then be thickened and dewatered and sent off-site for disposal. This practice involves operational costs for both reagent consumption and sludge disposal. Currently all attempts to reduce cost have been directed towards the reduction in sludge disposal cost, for example by improving sludge dewatering thereby reducing the volume of sludge to be disposed of.

JP-A-50142466 (CA 84(12):79406c) discloses the oxidation with ozone and subsequent dewatering of an iron-containing sludge produced during flocculation of waste water with ferrous sulphate at pH 10.2. Reportedly, the ozonation oxidises the precipitated ferrous hydroxide to ferric oxide and thereby markedly decreases sludge formation compared with treatment with hydrated lime. In particular, when a sludge obtained by treatment of one litre of a dye-containing waste water with ferrous sulphate was oxidised with 90 mg ozone, the volume of sludge formed was 70 cm³. After dewatering, the volume of the remaining sludge cake was 14 cm³. This compared with volumes of 210 cm³ and 21 cm³, respectively, when the slurry was oxidized with 20% Ca(OH)₂.

According to the present invention in its broadest aspect, there is provided a method of removing organic impurities from water comprising mixing with said impurities-containing water a chemical precipitation reagent to remove organic substances by charge neutralisation thereof and separating the resultant sludge from the treated water, characterized in that the separated sludge is subjected to oxidising conditions to oxidize the organic substances in the sludge, the oxidised sludge is dewatered, and at least a portion of the dewatered sludge is recycled, if necessary after regeneration to provide the chemical precipitation reagent, for mixing with further impurities-containing water.

In a presently preferred embodiment, said reagent is a salt of a metal having an insoluble hydroxide and the effluent is maintained at acid pH when the salt is added so that organic substances can be removed both by charge neutralization of hydrophilic organic substances and by entrainment of hydrophobic organic substances.

Preferably the metal salt is a water-soluble salt of a metal having two or more oxidation states, such as aluminum, calcium, chromium, iron, and manganese. Presently, the most preferred metal salts are Fe(III) or Al(III) salts, especially chlorides or sulphates and particularly Fe₂(SO₄)₃.

In order to ensure reaction of the metal salt with organic substances in the impurities-containing water to form insoluble salts by charge neutralization, the water must be at acid pH (pH less than 6) during salt addition. Thus, it may be necessary to adjust the pH of the water before or during addition of the metal salt by addition of a suitable acid or base. Preferably, the water is at about pH 5.5 during the salt addition.

Preferably, the sludge oxidation step is conducted by ozonation, usually at ambient temperature and pressure. However, other oxidative methods, such as with air oxygen at elevated pressure and temperature, can be used. For example, the oxidation can be wet air oxidation at below 375°C and 22 MPa (220 bar) or supercritical oxidation at above 375 °C and 22 MPa (220 bar).

Preferably, the metal species of the salt is selected to catalyse the oxidation.

Conveniently, the metal salt is added to the impurities-containing water in a mixing chamber with a residence time sufficient to permit formation of the sludge, usually 1 to 5 minutes. The resultant mixture can then be fed to a settling tank for sufficient time for the sludge to settle, usually 10 to 30 minutes, and the sludge and treated water separately removed from the tank. Alternatively, the mixture can be separating by dissolved air flotation or other conventional separation method.

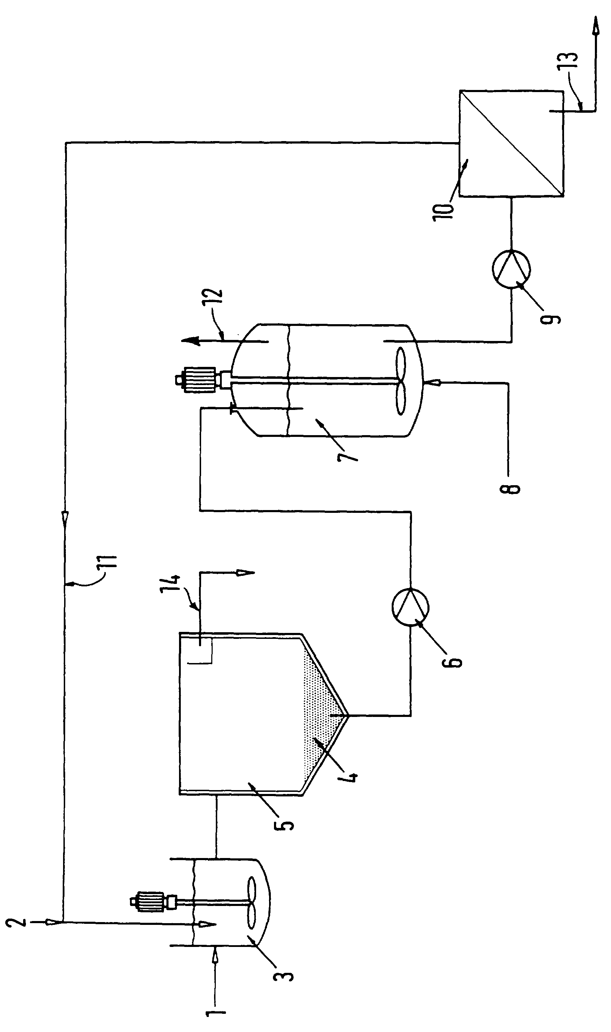

The following is a description by way of example only and with reference to the accompanying drawing of a presently preferred embodiment of the invention. The single figure of the drawing is a diagrammatic representation of apparatus for treating waste water by the method of the invention.

In the treatment apparatus shown in the drawing, surface water or industrial aqueous effluent is fed to an effluent inlet 1. Some aqueous industrial effluents such as waste water from textile industry processes or landfill leachate, typically contain hydrophobic, toxic organic substances such as halogenated pesticides at a level on the order of 1 to 1000 ppb (parts per billion), the main waste material in the effluent being hydrophilic relatively nontoxic organic substances which are present at a level on the order of 1,000 to 100,000 ppm (parts per million), the latter presenting overwhelmingly the greater chemical oxygen demand (COD). Preferably, the hydrophobic, toxic organic substances are first removed and oxidized by, for example, the method described in a copending Patent Application filed by present Applicant on the same date as the present application and claiming priority from UK Patent Application No. 9501401.5. In said method, hydrophobic organic substances are separated from the effluent by adding to the effluent at pH 6 to 8 a salt of a metal having an insoluble hydroxide thereby forming an hydroxide sludge entraining said hydrophobic, oxidizable organic substances, and the sludge is separated from the treated effluent containing the hydrophilic organic substances and then oxidized to destroy the oxidizable organic substances contained therein. The separate oxidation of said toxic substances, if present, significantly reduces the oxidant consumption for the present process because the discharge consent levels for the bulk of the organic waste is on the order of ppm whereas that for said toxic substances is on the order of ppb removed.

Referring to the drawing, the impurity-containing water to be treated passes through an inlet 1 to a mixing chamber 3 where it is mixed with ferric sulphate recycled via line 11 supplemented with fresh ferric sulphate via line 2. If necessary, the pH of the water is adjusted to about 5.5 with, for example, H₂SO₄. In the mixing chamber 3, the salt/water mixture is mixed by a rotary agitating paddle and there is rapid precipitation of ferric hydroxide. The bulk of the organic substances in the water are removed in the sludge as insoluble salts formed by charge neutralization with the iron cations and hydrophobic organic substances are entrained in the precipitate. The resulting mixture is fed to a settling tank 5, where the sludge is settled and separated from the treated water, which is discharged via line 14. The sludge is then pumped by pump 6 from the settling tank 5 to an ozonation reactor 7 where organic substances in the sludge are destroyed by oxidation with ozone gas supplied via inlet 8. The oxidation by the ozone gas is catalysed by the iron cations in the sludge. Spent gas exhausts from the reactor 7 through an outlet 12.

The oxidized sludge is then pumped by pump 9 to a separator 10 where it is separated from solution (dewatered) by centrifuging, or other solid/liquid separation methods. All or part of the treated and dewatered sludge is passed along a conduit 11 to be re-used as fresh coagulation reagent after regeneration of ferric sulphate by treatment with sulphuric acid. The treated sludge liquor exits the separator 10 via line 13 for disposal.

A clean water washing stage can be included between the settling and dewatering stages to purify the sludge if the treated water 14 is intended for drinking water purposes.

The invention is further illustrated in the following Example.

### Example

A litre of raw contaminated surface water was treated using an aluminium salt (PAC, polyaluminium chloride) in an amount equivalent to 5 mg Al by fast mixing (stirring at 475 rpm) of the water with the aluminium salt for 2 minutes followed by slower mixing (stirring at 40 rpm) for 20 minutes and then standing still for 60 minutes. The supernatant was withdrawn and provides the treated water. The settled sludge, which contains the contaminants and aluminium hydroxide, was treated with ozone at a rate of 360 mg ozone per litre of sludge.

30 cm³ of the ozonated sludge was recycled by mixing with a further litre batch of the raw surface water following the identical procedure as with the fresh aluminium salt (PAC) reported above. The treated water using the ozone processed sludge possessed the same as or slightly better quality than the water treated by fresh coagulant (PAC). The contaminants in the surface water used cause turbidity and hence the level of contamination was measured as turbidity. The raw surface water had a turbidity of 3.5 NTU; after the treatment with fresh PAC, the treated water had a turbidity of 0.2 NTU; and, after treatment with the recycled sludge, the treated water had a turbidity of only 0.17 NTU.

This invention, at least in preferred embodiments, reduces the costs related to the sludge disposal and chemical consumption because the precipitation reagents are re-used. In contrast, the current practice consists of adding new reagents each time and disposing of the sludge.

It will be appreciated that the invention is not restricted to the specific details of the embodiment described above and that numerous modifications and variations can be made without departing from the scope of the invention as defined in the following claims.

## Claims

1. A method of removing organic impurities from water comprising mixing with said impurities-containing water a chemical precipitation reagent to remove organic substances by charge neutralisation thereof and separating the resultant sludge from the treated water, characterized in that the separated sludge is subjected to oxidising conditions to oxidize the organic substances in the sludge, the oxidised sludge is dewatered, and at least a portion of the dewatered sludge is recycled, if necessary after regeneration to provide the chemical precipitation reagent, for mixing with further impurities-containing water.

2. A method as claimed in Claim 1, wherein said reagent is a salt of a metal having an insoluble hydroxide and the effluent is at acid pH during salt addition so that organic substances are removed both by charge neutralization of hydrophilic organic substances and by entrainment of hydrophobic organic substances.

3. A method as claimed in Claim 2, wherein the metal salt is a water-soluble salt of a metal having two or more oxidation states.

4. A method as claimed in Claim 3, wherein the metal salt is an Fe(III) or Al(III) salt.

5. A method as claimed in Claim 4, wherein the metal salt is ferric sulphate.

6. A method as claimed in any one of Claims 2 to 5, wherein said impurities-containing water is at pH less than 6 during the salt addition.

7. A method as claimed in Claim 6, wherein said pH is about pH 5.5.

8. A method as claimed in any one of the preceding claims, wherein said oxidation is conducted using ozone.

9. A method as claimed in any one of Claims 1 to 7, wherein said oxidation is conducted using air or oxygen at elevated pressure and temperature.

10. A method as claimed in Claim 9, wherein said oxidation is wet air oxidation at below 375 °C and 22 MPa (220 bar).

11. A method as claimed in Claim 9, wherein said oxidation is supercritical oxidation at above 375 °C and 22 MPa (220 bar).

12. A method as claimed in any one of the preceding claims, wherein the metal species of said salt catalyses said oxidation.
